(19) **European Patent Office**

Europäisches Patentamt

European Patent Office

Office européen des brevets

(11) **EP 0 987 812 A1**

(12) **EUROPEAN PATENT APPLICATION**
published in accordance with Art. 158(3) EPC

(43) Date of publication:
**22.03.2000 Bulletin 2000/12**

(21) Application number: **99912117.1**

(22) Date of filing: **06.04.1999**

(51) Int. Cl.$^7$: **H02K 29/00**, H02K 7/14

(86) International application number:
**PCT/JP99/01813**

(87) International publication number:
**WO 99/52199 (14.10.1999 Gazette 1999/41)**

(84) Designated Contracting States:
**DE FR GB IT**

(30) Priority: **07.04.1998 JP 11153998**

(71) Applicant:
**Nippon Thermostat Co., Ltd.
Kiyose-shi, Tokyo 204-0003 (JP)**

(72) Inventor: **SANO, Mitsuhiro
Tokyo 204-0003 (JP)**

(74) Representative:
**Urner, Peter, Dipl.-Phys.
TER MEER STEINMEISTER & PARTNER GbR,
Patentanwälte,
Mauerkircherstrasse 45
81679 München (DE)**

(54) **DRIVEN BODY DISPLACEMENT SENSOR COMPRISING BRUSHLESS MOTOR**

(57) The opening of a flow control valve 15, which controls the amount of a cooling media transferred to a radiator side, is controlled by a brushless motor 11. The rectifying switch signal is received by a phase sequence detecting circuit 22a to control an up-down counter 22b. The counted value from the counter 22b is calculated by a calculation circuit 22c, making it possible to grasp the opening of the flow control valve 15. By feeding this back to the ECU to make a calculation together with other drive parameters, ideal cooling control for an engine can be realized. Particularly, since the use of the opening sensor for the flow control valve 15 is unnecessary, an apparatus can be made into a small size with a low price.

Fig.4

## Description

### 1. FIELD OF THE INVENTION

The present invention relates to a device for detecting a displacement in a driven element by a brushless motor as a drive source, and for example, to a device for a displacement in a driven element, which can electrically detect the opening of a flow control valve which transfers a cooling medium for an automobile engine to a radiator side.

### 2. BACKGROUND OF ART

An engine for, e.g., an automobile has a water-cooled cooler which generally utilizes a radiator in order to cool the engine. In such a type of water-cooled cooler, a cooling medium, which is heated up by passing the cooling medium through a water jacket within the engine, is circulated into a radiator side to cool down the cooling medium by means of the heat radiation through the radiator, and the cooled cooling medium is again transferred within the water jacket of the engine.

In such a water-cooled cooler, a bypass channel is provided from an outlet of the cooling medium of the engine to an inlet of the cooling medium of the engine, and a flow control valve for the cooling medium is provided on a water channel extending from the engine to the radiator side. By controlling the opening of the flow control valve, the amount of the cooling medium flowing into the radiator side is controlled. This can adjust the cooling efficiency to control the temperature of the cooling medium within a constant level, and finally to get the engine to an optimum temperature.

In recent years, as such types of cooling control apparatus, those having a control unit (hereinafter referred to as "ECU") which inputs various parameters such as engine load information to calculate the optimal opening of the flow control valve, a motor driven by a control signal from the ECU, and a butterfly valve as the flow control valve whose opening is controlled by the power of the motor have been suggested.

In such a cooling control apparatus, an opening sensor which detects the opening of the butterfly valve is necessarily utilized as a displacement detecting device, and while the condition of the opening of the butterfly valve obtained from the opening sensor is fed back to the ECU, the opening of the butterfly valve is controlled to become the optimal depending upon the drive conditions.

In the case of the cooling control apparatus described above, the opening sensor to detect the opening of the butterfly valve is necessarily required as the displacement detecting means for the butterfly valve in the system. Consequently, the flow control unit has been configured to unify the opening sensor with the butterfly valve.

As a result, the size of the flow control unit placed within the engine room must become unduly large and, in some cases, layout of the engine room becomes difficult. Also, due to the increase in the number of parts, there arises the technical problem of increasing the cost.

### SUMMARY OF THE INVENTION

The present invention has been made in light of the above situations, and an object of the present invention is to provide a device for detecting displacement in a driven element, which can electrically detect the displacement in the driven element driven by a brushless motor, represented by a butterfly valve, and which can be produced into a small size so as to save cost.

The present invention which attain the object described above concerns a device for detecting displacement in a driven element driven with a brushless motor, comprising: a brushless motor; a driven element driven with said brushless motor; a counter means which counts a number of waveform signals obtainable from an magnet-electricity conversion element based on the rotation of a magnet rotor of said brushless motor; and a calculation means which calculates the displacement in the driven element on the basis of the counted value from the counter means.

The device for detecting a displacement in a driven element driven with a brushless motor in this case is preferably configured so that said brushless motor possesses at least three magnet-electricity conversion elements placed so as to opposite the rotating magnet rotor, and said counter means possesses an up-down counter, which detects the phase condition of the waveform signal generated in each electricity-magnet conversion element to extract up-down information, and which reversibly counts the number of the waveform signals on the basis of the up-down information.

In this preferred embodiment, said driven element driven is a flow control valve for a cooling medium whose open degree may be controlled by the rotation of the brushless motor via a reduction gear mechanism, and the opening of the flow control means may be calculated by said calculation means on the basis of the output from the counter means possessing said up-down counter.

In this case, it is further preferred that said calculation means calculates the open degree of the flow control means at least from the counted value obtainable from said counter means and the ratio of reduction of said reduction gear mechanism.

According to the device for detecting a displacement in a driven element according to the present invention configured as described above, in the counter means, a number of waveform signals obtainable from a magnet-electricity conversion element based upon the rotation of a magnet rotor of the brushless motor are counted. Then, in the calculation means, for example, the opening of the butterfly valve as the driven element is calculated.

Consequently, it becomes possible to obtain the opening of the butterfly valve from the waveform signals obtainable from the brushless motor in a so-called electric manner.

Also, for example, by using a Hall element as the magnet-electricity conversion element which is utilized in the rectifying switching function of the brushless motor as is, and by counting the number of the output waveform signals of the Hall element, the displacement of the driven element, i.e., opening of the butterfly valve can be calculated.

BRIEF DESCRIPTION OF THE DRAWINGS

Fig. 1 shows a configuration of an embodiment of the device for detecting displacement in a driven element that is utilized in a cooling control apparatus for an engine.
Fig. 2 shows part of a configuration of a brushless motor utilized in the present invention.
Fig. 3 is a timing chart which shows the relationship between a magnet-electricity conversion signal and a rectangular wave for driving both produced in the brushless motor shown in Fig. 2
Fig. 4 is a block diagram showing a control circuit of the device for detecting displacement in a driven element utilized in a cooling control apparatus for an engine.
Fig. 5 is a flow chart showing the functions made by the circuit shown in Fig. 4.

DETAILED DESCRIPTION OF THE PREFERRED EMBODIMENT(S)

The device for detecting displacement in a driven element according to the present invention will now be described on the basis of an embodiment where the device is utilized in a flow control apparatus of a cooling medium in an engine.

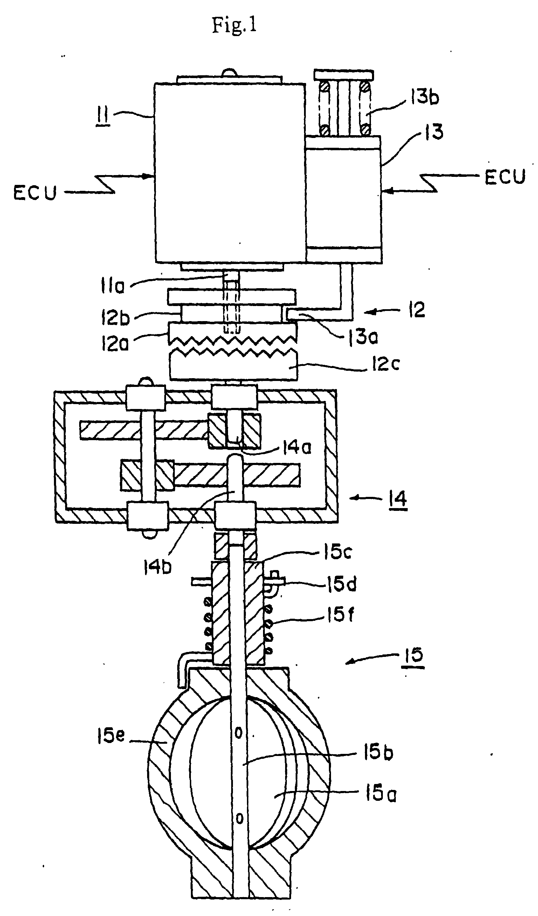

Fig. 1 shows a configuration of carrying out the detection of the opening of the butterfly valve for controlling the flow amount of the cooling medium by a brushless motor. As shown in Fig. 1, a first clutch disc 12a making up a clutch mechanism 12 is equipped with a drive shaft 11a of a brushless motor 11. The drive shaft 11a of the motor 11 is made into a polygonal prism shape on one hand, and at the side of the first clutch disc 12a, a polygonal pore is formed in order to surround the drive shaft 11a on the other hand. By such a configuration, the first clutch disc 12a is connected to the rotation direction of the drive shaft 11a and is slidable in the shaft direction of the drive shaft 11a.

A circular groove 12b is formed on surface of the circumference of the first clutch disc 12a, and an end of a working element 13a of an electronic plunger 13 is loosely inserted into the circular groove 12b. A coil spring 13b is equipped with the plunger 13, and by the opening action of the coil spring coil 13b, the first clutch disc 12a is pulled into the side of the motor 11 in the state of not running the electricity through to the plunger 13 as shown in Fig. 1.

A second clutch disc 12c is placed opposite the first clutch disc 12a, and the second clutch disc 12c is fixed onto a rotating shaft 14a at the input side of what makes up a reduction gear mechanism 14.

The reduction gear mechanism 14 is composed of combinations of pinions and spur gears. An output shaft 14b whose speed is reduced by such combinations is configured to drive a flow control valve 15. In the embodiment shown in the figure, the flow control valve 15 is composed of a butterfly valve 15a having a circular flat plate shape. The output shaft 14b of the reduction gear mechanism 14 is connected to a valve shaft 15b with which the butterfly valve 15a is equipped. As is well-known in the art, the butterfly valve 15a controls the flow amount of the cooling medium by adjusting the angle of the butterfly valve 15a in the plane direction relative to the direction of the circulation of the cooling medium (adjustment of the opening).

A tubular member 15c is equipped with the valve shaft 15b, and a return spring 15f in a coil form, both ends of which are communicated, is placed between a pin member 15d standing on the tubular member 15c and a case 15e of the flow control valve 15 to apply a resilient force to the direction of opening the butterfly valve 15a.

Consequently, in the state of setting the clutch mechanism 12 free, the butterfly valve 15a is in an open state by the action of the return spring 15f.

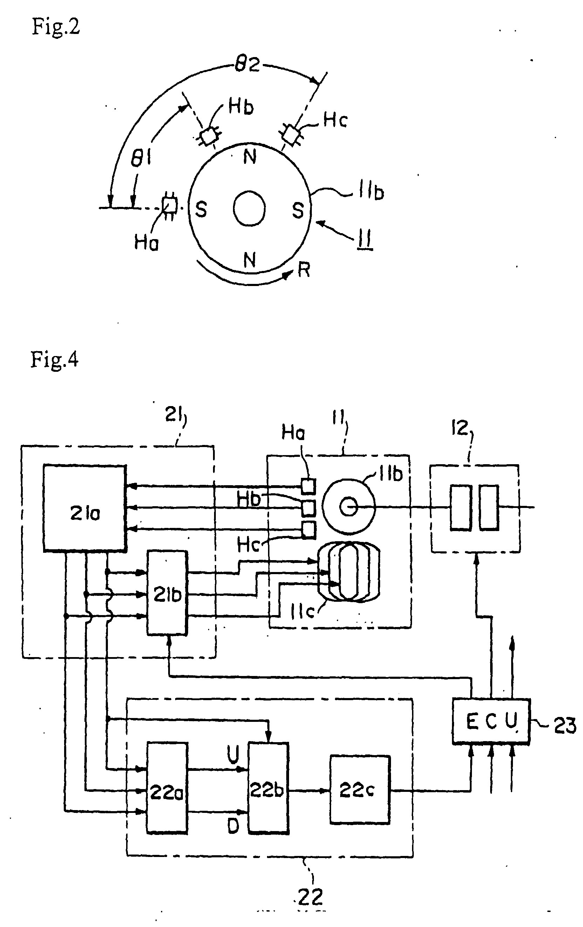

Fig. 2 shows part of a brushless motor which controls the state of opening the butterfly valve. As is well known in the art, a magnet rotor 11b is placed on the brushless motor 11, and three Hall elements Ha, Hb, and Hc, serving as the magnet-electricity conversion element, are placed opposite the magnet rotor 11b. The Hall elements Ha, Hb, and Hc are placed along the magnetic pole of the magnet rotor 11b at every angle of 60°. To be specific, starting from the first Hall element Ha, the second Hall element Hb is placed at the position where $\theta 1 = 60°$, and starting from the first Hall element Ha, the third Hall element Hc is placed at the position where $\theta 2 = 120°$.

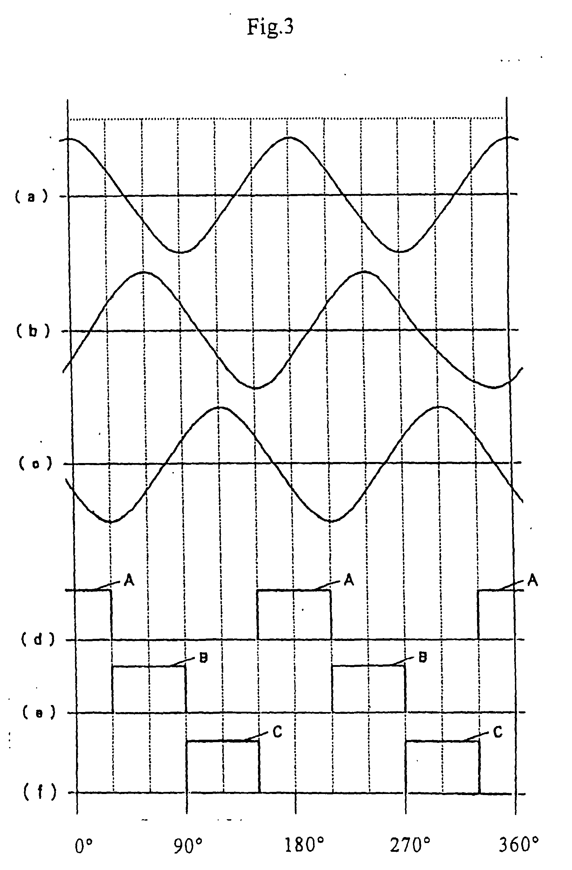

By such an arrangement, according to the rotation of the magnet rotor 11b in the direction toward the arrow R, waveform signals each having a phase relation of an electrical angle of 60° are obtained as shown by (a), (b), and (c) in Fig. 3. These waveform signals are converted into rectangular wave signals of A phase, B phase and C phase shown by (d), (e), and (f) in fig. 3 by means of a waveform shaping circuit, which will be described later on. By using these rectangular waves, a drive signal is supplied to a drive coil at a stator side positioned on the brushless motor.

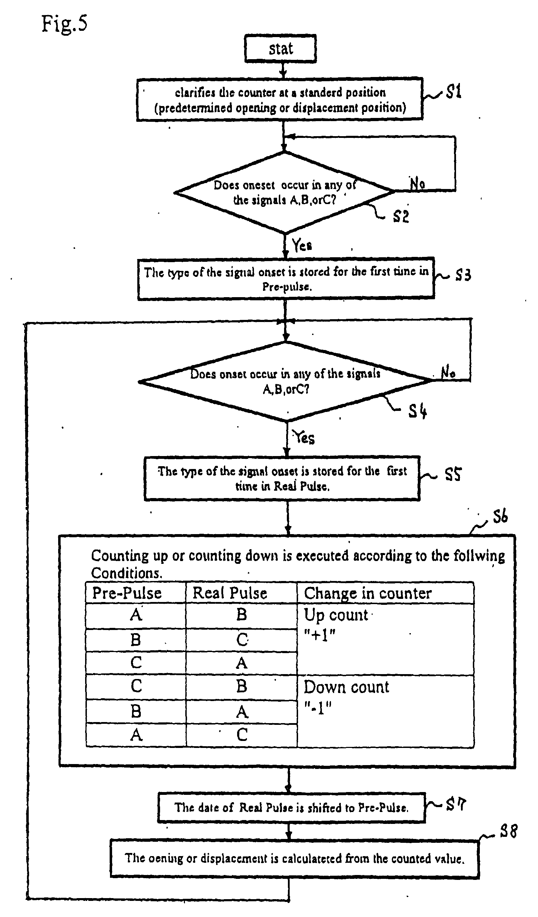

Fig. 4 shows a configuration of a drive circuit of the brushless motor 11 and a configuration of a calculation means which calculates the opening of the butterfly valve utilizing the rectangular wave signals of the A phase, B phase, and C phase obtainable from the drive circuit of the brushless motor 11. To be specific, number 21 shows a basic configuration of the drive circuit of the brushless motor 11, and waveform signals shown as (a), (b), and (c) in Fig. 3 obtainable from Hall elements Ha, Hb, and Hc are supplied to a waveform shaping circuit 21a of the drive circuit 21. In the waveform shaping circuit 21a, these waveform signals are compared with a prescribed threshold voltage and converted into rectangular wave signals of A phase B phase and C phase, respectively shown by (d), (e), and (f) of Fig. 3.

These rectangular wave signals are supplied to a motor control circuit 21b, which has a function where a current switched by this circuit is run through stator coils 11c possessed by the brushless motor 11. Magnetic fields are generated one after another by the stator coil 11 so as to rotate the magnet rotor 11b.

Number 22 shows a circuit for detecting a displacement, which is composed of a counter circuit, which receives the rectangular wave signals of the A phase, B phase, and C phase shown by (d), (e), and (f) obtainable from the waveform shaping circuit 21a of the drive circuit 2, and a calculation circuit. These rectangular wave signals of A phase, B phase, and C phase are supplied to a phase sequence detecting circuit 22a. An up-down command signal produced from the phase sequence detecting circuit 22a is supplied to an up-down counter 22b.

It is configured that one of the rectangular wave signals of A phase, B phase, or C phase, for example that of A phase, is supplied to this up-down counter 22b. The up-down counter 22b counts the number of onsets of the rectangular wave of A phase, and supplies the number counted to the calculation circuit 22c by adding or reducing the onsets on the basis of the up-down command signals supplied from the phase sequence detecting circuit 22a.

The calculation circuit 22c is a circuit which receives the counted value from the up-down counter 22b to calculate the displacement in the butterfly valve, which is the driven element, i.e., the opening of the butterfly valve. The opening of the butterfly valve is at least calculated from the counted value "n" obtainable from the up-down counter 22b and the speed reduction ratio of the reduction gear mechanism 14.

As shown in Fig. 3, the signal of A phase has two onsets (2 pulse numbers) per one rotation of the motor. For example, if the speed reduction ratio of the reduction gear mechanism 14 is assumed to be "100", the opening θv of the butterfly valve can be calculated from the following equation:

$$\theta v = [n \times (1/2)/100] \times 360° \quad (1)$$

The opening θv of the butterfly valve thus obtained is supplied from the calculation circuit 22c to the engine control unit (ECU) 23. The ECU 23 takes other parameters which show the drive conditions of the engine, determines whether the opening θv of the butterfly valve is further to be opened or to be closed, and supplies the control signal to the motor control circuit 21b to control the drive of the brushless motor 11.

A control signal is also transferred from the ECU 23 to the plunger 13, which controls the clutch mechanism 12, and at the time of starting the engine, the control signal is transferred from the ECU 23 to actuate the plunger so as to connect the clutch mechanism 12, whereby the opening of the butterfly valve 15a can be controlled by the motor 11.

Fig. 5 is a flow chart explaining the functions of the displacement detecting circuit 22. At the time of starting the engine, the counter 22b in the displacement detecting circuit 22 clarifies the counted value in STEP S1.

In the case of the configuration shown in Fig. 1, at the time of stopping the engine, the butterfly valve 15a is left opened by means of the return spring 15f, and this open state is taken as the standard position.

Then, accompanying the engine starting, the plunger 13 is driven as described above, and the clutch mechanism 13 is connected, making it possible to open or close the butterfly valve 15a by means of the motor 11.

The phase sequence detecting circuit 22a monitors the onsets of the rectangular wave signals A, B, and C shown in Fig 3 in STEP S2. When an onset occurs in any of the signals A, B, or C (when being YES), the type of the signal onset is stored for the first time in a storage area (Pre-Pulse) (not shown) constructed in the phase sequence detecting circuit 22a.

Subsequently, in STEP S4, the phase sequence detecting circuit 22a monitors the onsets of the rectangular wave signals A, B, and C. When an onset occurs in any of the signals A, B, or C (when being YES), the type of the signal onset (when being YES), the type of the signal subsequently onset is stored in a storage area (not shown) (Real Pulse) which stores the signal at the present states constructed in the phase sequence detecting circuit 22a.

In STEP S6, the phase sequence detecting circuit 22a produces a command signal of an up count or a down count by comparing the types of the signals stored in these storage areas. To be specific, as shown in STEP S6, in the case where the phase sequence is one of any of from A to B, from B to C, or from C to A, for example, it means that the butterfly valve drives in the direction of closing the valve. In this case, a control signal which directs an "up count" is transferred to the up-down counter 22b taking the open state as the standard. In the case where the phase sequence is one of any of from C to B, B to A or A to C, for example, it means that the butterfly valve 15a drives in the direction of opening the valve. In this case, a control signal which directs a "down count" is transferred to the up-down counter 22b.

The up-down counter 22b monitors the onset of the rectangular wave signal of phase A, and executes the addition or reduction of the counted value on the basis of an up-count command or a down-count command coming from the phase sequence detecting circuit 22a at the time of the onset.

Next, in STEP S7, an operation (i.e., rewriting) is carried out in which the data from the storage area (Real Pulse), which stores the signal at the present states, is shifted to the storage area (Pre-Pulse) which stores the signal states just prior to the present states. In subsequent STEP 8, the calculation circuit 22c calculates the opening θv of the butterfly valve 15a on the basis of the counted value "n" supplied from the up-down counter 22. In this case, the calculation is carried out according to the equation (1) described above.

The information of the opening θv of the butterfly valve thus obtained is supplied to the ECU 23 as described above. The ECU 23 then takes other parameters, which show the drive conditions of the engine, and supplies a control signal, which controls the opening θv of the butterfly valve, to the motor control circuit 21b.

Thereafter, the process is again returned to STEP 4 to itinerate similar routine. To be specific, the counter 22b grasps the phase sequence of the rectangular wave at every itinerary of the routine, and counts up or counts down to generate the counted value "n" corresponding to the opening of the butterfly valve.

By utilizing the control signals for switching and driving the brushless motor as is, the opening of the butterfly valve can be grasped. By feeding these signals back to the ECU to make a calculation together with other drive parameters, ideal cooling control can be realized.

As is clear from the description described above, according to the device for detecting a displacement in a driven element by a brushless motor of the present invention, since switching signals for use in the rectifying function of the brushless motor are used as they are to detect the displacement in a driven element, for example, the use of the opening sensor is unnecessary.

Consequently, in the embodiment of being used in the cooling control apparatus as exemplified above, the flow control unit to be placed in the engine room can be made into a small size, making it possible to provide an easier layout in the engine room. Also, in this case, since the number of parts to be used can be decreased, an apparatus having a low price can be provided.

While the description described above is based on one embodiment where the device for detecting a displacement according to the present invention is used in the cooling control apparatus for an engine, it should be noted that the present invention is not restricted to such a specific apparatus, and it can be utilized in any other apparatuses so long as it does not deviate from the scope and the spirit of the present invention.

**Claims**

1.  A device for detecting displacement in a driven element driven with a brushless motor, comprising:

    a brushless motor;
    a driven element driven with said brushless motor;
    a counter means which counts a number of waveform signals obtainable from an magnet-electricity conversion element based on the rotation of a magnet rotor of said brushless motor; and
    a calculation means which calculates the displacement in the driven element on the basis of the counted value from the counter means

2.  The device for detecting displacement in a driven element as claimed in claim 1, wherein said brushless motor possesses at least three magnet-electricity conversion elements placed so as to opposite the rotating magnet rotor, and said counter means possesses an up-down counter, which detects the phase condition of the waveform signal generated in each electricity-magnet conversion element to extract up-down information, and which reversibly counts the number of the waveform signals on the basis of the up-down information.

3.  The device for detecting displacement in a driven element as claimed in claim 2, wherein said driven element driven is a flow control valve for a cooling medium whose open degree is controlled by the rotation of the brushless motor via a reduction gear mechanism, and the opening of the flow control means is calculated by said calculation means on the basis of the output from the counter means possessing said up-down counter.

4.  The device for detecting displacement in a driven element as claimed in claim 3, wherein said calculation means calculates the open degree of the flow control means at least from the counted value obtainable from said counter means and the ratio of reduction of said reduction gear mechanism.

Fig.1

Fig.2

Fig.4

## Fig.3

( a )

( b )

( c )

( d )

( e )

( f )

A

A

A

B

B

C

C

0°     90°     180°     270°     360°

Fig.5

```
            ┌──────────┐
            │   stat   │
            └──────────┘
                 │
   ┌─────────────────────────────────────┐
   │ clarifies the counter at a standerd  │ ～ S1
   │ position (predetermined opening or   │
   │ displacement position)               │
   └─────────────────────────────────────┘
                 │
         ┌──────────────────┐
         │ Does oneset occur │  No
    ◇────│ in any of the     │────────┐
         │ signals A,B,orC?  │        │
         └──────────────────┘ ～ S2   │
                 │ Yes                │
   ┌─────────────────────────────────────┐
   │ The type of the signal onset is      │ ～ S3
   │ stored for the first time in Pre-pulse.│
   └─────────────────────────────────────┘
```

| Pre-Pulse | Real Pulse | Change in counter |
|-----------|-----------|------------------|
| A | B | Up count "+1" |
| B | C | |
| C | A | |
| C | B | Down count "-1" |
| B | A | |
| A | C | |

Counting up or counting down is executed according to the follwing Conditions.

The date of Real Pulse is shifted to Pre-Pulse. ～ S7

The oening or displacement is calculateted from the counted value. ～ S8

The type of the signal onset is stored for the first time in Real Pulse. ～ S5

Does onset occur in any of the signals A,B,orC? No ～ S4

～ S6

# INTERNATIONAL SEARCH REPORT

| | International application No. |
|---|---|
| | PCT/JP99/01813 |

| A. CLASSIFICATION OF SUBJECT MATTER | |
|---|---|
| Int.Cl⁶ H02K29/00, 7/14 | **EPO - Munich**<br>**22**<br>**0 2 Dez. 1999** |
| According to International Patent Classification (IPC) or to both national classification and IPC | |

**B. FIELDS SEARCHED**

Minimum documentation searched (classification system followed by classification symbols)
Int.Cl⁶ H02K29/00, 7/14, 21/00, B62D6/00, F01P7/16, F02D11/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 6-144274, A (Matsushita Electric Industrial Co., Ltd.),<br>24 May, 1994 (24. 05. 94),<br>Full text ; Figs. 1 to 6<br>Full text ; Figs. 1 to 6 (Family: none) | 1, 2<br>3, 4 |
| Y | JP, 3-258916, A (Mitsubishi Electric Corp.),<br>19 November, 1991 (19. 11. 91),<br>Full text ; Figs. 1 to 5<br>& KR, 9405669, B1 | 3, 4 |
| A | JP, 6-94151, A (Hitachi,Ltd.),<br>5 April, 1994 (05. 04. 94),<br>Full text ; Figs. 1 to 7 (Family: none) | 1-4 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 14 June, 1999 (14. 06. 99) | 29 June, 1999 (29. 06. 99) |

| Name and mailing address of the ISA/<br>Japanese Patent Office | Authorized officer |
|---|---|
| Facsimile No. | Telephone No. |

Form PCT/ISA/210 (second sheet) (July 1992)